# EUROPÄISCHE PATENTSCHRIFT

(11) **EP 2 767 807 B1**
(45) Veröffentlichungstag und Bekanntmachung des Hinweises auf die Patenterteilung: **17.06.2015**
(21) Anmeldenummer: 14151406.7
(22) Anmeldetag: 16.01.2014
(51) Int. Cl.: H01R 13/52, G01D 11/24, H01R 13/58

(54) **Leitungsfixierung für Sensorgehäuse**
Cable fixation for sensor housing
Fixation de câble pour boîtier de capteur

(30) Priorität: 18.02.2013 DE 102013101601
(43) Veröffentlichungstag der Anmeldung: 20.08.2014
(73) Patentinhaber: SICK AG, 79183 Waldkirch (DE)
(72) Erfinder: Kienzler, Bernd, 79104 Freiburg (DE); Schlosser, Roman, 79183 Waldkirch (DE); Scholder, Jochen, 79183 Waldkirch (DE)
(74) Vertreter: Ludewigt, Christoph

(56) Entgegenhaltungen:
- WO-A1-2004/055947
- WO-A2-2005/064278
- FR-A- 688 401
- US-A- 6 025 562

## Beschreibung

Die Erfindung betrifft eine Leitungsfixierung an einem Sensorgehäuse nach dem Oberbegriff von Anspruch 1 und ein Verfahren zur Leitungsfixierung an einem Sensorgehäuse nach Anspruch 6.

Die EP 1 489 389 A2 offenbart einen Positionssensor. Eine Zugentlastung für das Kabel des Positionssensors wird durch Verkleben des Kabelmantels mit dem Anschlusskörper realisiert. Hierzu ist die Aufnahmevertiefung, die die Wandung des Anschlusskörpers umfangsseitig begrenzt, mit einer als Klebekanal bezeichneten Durchbrechung versehen, die auf Höhe des Kabelmantels des eingesteckten Kabels in die Aufnahmevertiefung einmündet. Im eingesteckten Zustand des Kabels wird in den Klebekanal fliessfähiger Klebstoff eingefüllt, der sich dann aufgrund einer Kapillarwirkung um den Kabelmantel herum zwischen diesem und der Umfangsfläche der Aufnahmevertiefung verteilt und dadurch eine großflächige Verklebung zwischen dem Kabelmantel und dem Anschlusskörper hervorruft. An dem Kabel angreifende Zugbeanspruchungen werden somit vom Anschlusskörper abgefangen und belasten nicht die elektrisch leitende Verbindung zwischen den Adern und den Kontaktierungsflächen.

Die US 6025562 A offenbart einen Näherungssensor und ein Herstellungsverfahren für einen Näherungssensor.

Die WO 2004/055947 A1 offenbart einen elektrischen Verbinder.

Die FR 688 401 offenbart einen verbesserten Stecker mit Kontaktelementen.

Die WO 2005/064278 A2 offenbart ein Verfahren zur Herstellung eines Schaltgeräts sowie eine Baugruppe für ein Schaltgerät.

Die Aufgabe der vorliegenden Erfindung besteht darin, eine möglichst einfache Leitungsfixierung an einem Sensorgehäuse bereitzustellen, die wenig Platz beansprucht, die nach den Anforderungen der Schutzklasse IP67 dicht ist, wobei diese Dichtigkeit auch nach einer Alterung, bzw. bei hohen Temperaturwechseln und nach einer Zugbelastung der Leitung gewährleistet sein soll.

Die Aufgabe wird gelöst mit einer Leitungsfixierung an einem Sensorgehäuse nach Anspruch 1 bzw. einem Verfahren zur Leitungsfixierung nach Anspruch 6, wobei die Leitung an zwei beabstandeten Stellen fixiert ist, wobei zwischen diesen beabstandeten Stellen eine Klebekammer vorhanden ist, welche die Leitung vollständig radial umgibt, wobei das Sensorgehäuse einen Gehäuseteil aufweist, wobei in dem Gehäuseteil die Leitung die das Gehäuseteil durchsetzt fixiert ist, wobei die Leitung an den zwei beabstandeten Stellen in einer Gehäusewand fixiert ist, wobei eine erste Fixierung eine dichte Fixierung bildet und eine zweite Fixierung mindestens eine Entlüftungsöffnung umfasst, wobei zwischen diesen Fixierungen ein Einfüllstutzen angeordnet ist und die Klebekammer ausgehend von dem Einfüllstutzen in Richtung der ersten Fixierung im Querschnitt größer werdend ausgebildet ist und in Richtung der zweiten Fixierung kleiner werdend, wobei in diese Klebekammer über den Einfüllstutzen Klebstoff durch Druck einspritzbar ist, zumindest bis der Klebstoff die zweite Fixierung mit der Entlüftungsöffnung erreicht.

Weiter wird die Aufgabe mit einem Verfahren zur Leitungsfixierung an einem Sensorgehäuse gelöst, wobei die Leitung an zwei beabstandeten Stellen fixiert wird, wobei zwischen diesen beabstandeten Stellen eine Klebekammer vorhanden ist, welche die Leitung vollständig radial umgibt, wobei das Sensorgehäuse einen Gehäuseteil aufweist, wobei in dem Gehäuseteil die Leitung die das Gehäuseteil durchsetzt fixiert ist, wobei die Leitung an den zwei beabstandeten Stellen in einer Gehäusewand fixiert ist, wobei eine erste Fixierung eine dichte Fixierung bildet und eine zweite Fixierung mindestens eine Entlüftungsöffnung umfasst, wobei zwischen diesen Fixierungen ein Einfüllstutzen angeordnet ist und die Klebekammer ausgehend von dem Einfüllstutzen in Richtung der ersten Fixierung im Querschnitt größer wird und in Richtung der zweiten Fixierung kleiner wird, wobei in die Klebekammer über den Einfüllstutzen Klebstoff durch Druck eingespritzt wird, zumindest bis der Klebstoff die zweite Fixierung mit der Entlüftungsöffnung erreicht.

Gemäß der Erfindung wird die Verteilung des Klebstoffes durch die Form der Klebekammer derart gesteuert oder gerichtet, dass der Klebstoff zuerst in den Bereich mit größer werdendem Fließquerschnitt und damit zunächst in Richtung der ersten Fixierung fließt, da dort ein geringerer Fließwiderstand durch die Geometrie der Klebekammer gegeben ist und dort die Leitung vollständig umschließt. Erst danach wird der Klebstoff in den im Querschnitt kleiner werdenden Bereich in Richtung der zweiten Fixierung fließen und den Rest der Klebekammer füllen. Da die zweite Fixierung eine Entlüftungsöffnung aufweist ist gewährleistet, dass der Klebstoff die Luft verdrängen kann und die Klebekammer vollständig ohne Lufteinschlüsse mit Klebstoff gefüllt wird.

Die erfindungsgemäße Leitungsfixierung ist sehr platzsparend ausgeführt und geeignet für einen minimalen Bauraum, daher kann die erfindungsgemäße Leitungsfixierung an sehr kleinen Sensoren, beispielsweise an Miniatursensoren eingesetzt werden. Weiter ist die Leitungsfixierung preiswert herstellbar.

Weiter wird durch die erfindungsgemäße Leitungsfixierung eine radial lückenlose Klebung sichergestellt, wodurch eine dichte Klebeverbindung gewährleistet ist. Dadurch kann die Leitungsfixierung hohen Zugkräften standhalten.

Die Geometrie der Klebekammer, wonach die Klebekammer ausgehend von dem Einfüllstutzen in Richtung der ersten Fixierung einen größer werdenden radialen Fließquerschnitt aufweist und in Richtung der zweiten Fixierung einen kleiner werdenden, gewährleistet eine prozesssichere Vermeidung von Lufteinschlüssen im Klebstoff, wodurch eine dichte Klebeverbindung gewährleistet ist. Eine solche Klebeverbindung kann eine Dichtigkeit nach der Schutzklasse IP67 gemäß der Norm EN60529 aufweisen.

Weiter kann für die Leitungsfixierung nahezu jeder Klebstoff verwendet werden. D. h. die Leitungsfixierung ist unabhängig von dem verwendeten Klebstoff. Der Klebstoff sollte lediglich in der Klebekammer aushärten und eine geringe Schrumpfung aufweisen während des Aushärtens.

Durch die erfindungsgemäße Leitungsfixierung werden die Anforderungen an Dichtigkeit und Zugfestigkeit vollständig erfüllt.

Gemäß der Erfindung werden Biegekräfte der Leitung nicht auf die Klebung übertragen, da die erste Fixierung die Biegekräfte aufnimmt und die Biegekräfte nicht auf die Klebung wirken können und damit die Klebung nicht durch die Biegekräfte beansprucht wird.

Nach der Erfindung können beide Fixierungspunkte durch das Gehäuse selbst gebildet sein, wodurch die Leitungsfixierung dann einstückig mit dem Gehäuse ausgebildet ist und ohne zusätzliche Teile auskommt.

In Weiterbildung der Erfindung ist das Sensorgehäuse in einem Spritzgussverfahren hergestellt, wodurch das Sensorgehäuse einfach herzustellen ist. Das Sensorgehäuse wird dabei als Kunststoffspritzling preiswert hergestellt.

In einer weiteren Ausführungsform der Erfindung ist die erste Fixierung durch ein Zentrierelement, insbesondere einen O-Ring gebildet, wodurch die Leitung derart zentriert ist, dass diese an dieser Fixierung und nicht an der Gehäusewand anliegt. Durch das Zentrierelement, bzw. den O-Ring ist ein zusätzliches Dichtelement gebildet. Durch den O-Ring wird auf die Gehäusewand und auf die Leitung ein Anpressdruck ausgeübt, wodurch eine noch dichtere Verbindung gewährleistet wird.

Gemäß einer weiteren Ausführungsform ist die zweite Fixierung durch das Sensorgehäuse selbst gebildet, wobei die zweite Fixierung durch Zentriernasen des Sensorgehäuses gebildet ist, wodurch die Leitung in diesem Abschnitt teilweise an der Gehäusewand anliegt und wodurch keine zusätzlichen Bauteile notwendig werden.

In Weiterbildung der Erfindung ist die Klebekammer konisch in Form eines Kegelstumpfes oder abgestuft ausgebildet. Dadurch ist die Klebekammer einfach herstellbar und die Verteilung des Klebstoffes wird durch die Form der Klebekammer besser gesteuert, so dass der Klebstoff zuerst im Bereich der ersten Fixierung die Leitung vollständig umschließt und danach den Bereich der zweiten Fixierung erreicht, so dass die Klebekammer vollständig mit Klebstoff gefüllt wird und die Klebekammer ohne Lufteinschlüsse gefüllt wird.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein Sensorgehäuse mit einer Leitung;
- Figuren 2 bis 9: eine Leitungsfixierung an dem Sensorgehäuse.

In den nachfolgenden Figuren sind identische Teile mit identischen Bezugszeichen versehen.

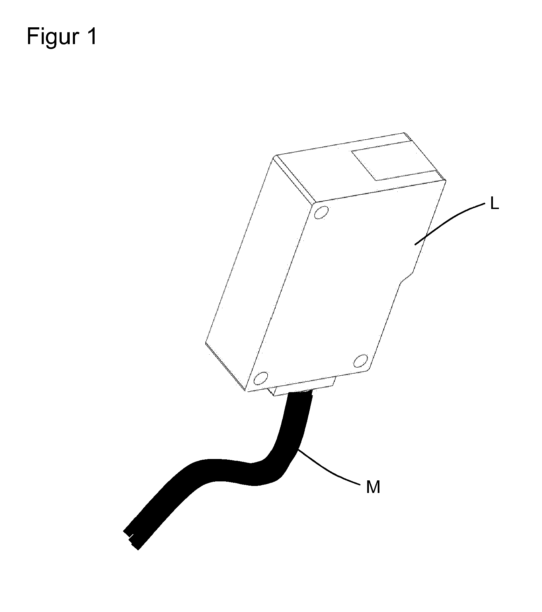

Figur 1 zeigt ein Sensorgehäuse L eines Sensors, der als optoelektronischer Sensor, beispielsweise als Lichtschranke oder Lichttaster ausgebildet ist oder auch nach einem anderen Sensorprinzip arbeitet, beispielsweise als induktiver oder kapazitiver Sensor. Der Sensor ist über die Leitung M angeschlossen, insbesondere zur Stromversorgung, aber auch zur Daten- oder Signalübertragung. Das Sensorgehäuse L kann andere Gehäuseformen aufweisen und insbesondere besonders klein als Miniatursensor ausgebildet sein.

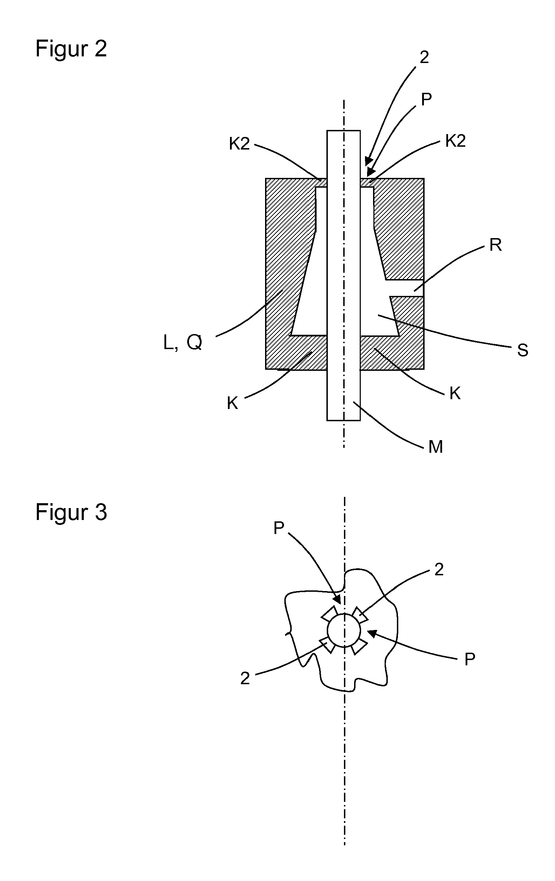

Figur 2 zeigt einen Querschnitt durch einen Teil einer Gehäusewand Q des Sensorgehäuses L aus Figur 1. In diesem Gehäuseteil Q soll die Leitung M, die das Gehäuseteil Q durchsetzt, fixiert werden. Dazu ist die Leitung M an zwei beabstandeten Stellen in der Gehäusewand Q fixiert, wobei zwischen diesen beabstandeten Stellen eine Klebekammer S vorhanden ist, welche die Leitung M vollständig radial umgibt. Eine erste Fixierung K bildet eine dichte erste Fixierung und eine zweite Fixierung K2 umfasst mindestens eine Entlüftungsöffnung 2 (Figur 3), wobei zwischen diesen Fixierungen ein Einfüllstutzen R angeordnet ist. Die Klebekammer S ist ausgehend von dem Einfüllstutzen R in Richtung der ersten Fixierung K im radialen Querschnitt größer werdend ausgebildet und in Richtung der zweiten Fixierung K2 im Querschnitt kleiner werdend. Über den Einfüllstutzen R wird Klebstoff N in die Klebekammer S durch Druck eingespritzt, zumindest bis der Klebstoff N die zweite Fixierung K2 mit der Entlüftungsöffnung 2 erreicht.

Die Form der Klebekammer S nach Figur 2 ist die eines Kegelstumpfes. Die Klebekammer S kann aber beispielsweise auch stufenförmig ausgebildet sein, d.h. dass der radiale Fließquerschnitt sich stufenweise verändert. Wesentlich für die Erfindung ist jedoch, dass die Klebekammer S in Richtung der ersten Fixierung K (in Figur 2 nach unten) einen größer werdenden radialen Fließquerschnitt aufweist und in Richtung der zweiten Fixierung K2 (in Figur 2 nach oben) einen kleiner werdenden.

An der zweiten Fixierung K2 sind beispielsweise Zentriernasen P gebildet, welche die Leitung M in der Klebekammer S axial zentrieren. Zwischen diesen Zentriernasen P sind Entlüftungsöffnungen 2 gebildet. Der Einfüllstutzen R für den Klebstoff N ist in diesem Ausführungsbeispiel als Kanal im unteren Drittel der Klebekammer S ausgebildet. Der Kanal sollte eine Öffnung bilden, wodurch der Klebstoff N gut durch Druck in die Klebekammer S eingepresst werden kann. Die erste Fixierung K und die zweite Fixierung K2 sind in diesem Beispiel durch das Sensorgehäuse L selbst gebildet, wodurch das Sensorgehäuse L einteilig oder auch zweiteilig ausgeführt sein kann, um Hinterschnitte zu vermeiden.

Figur 3 zeigt den Teil aus Figur 2 in der Draufsicht (Pfeil III), wobei die zweite Fixierung K2 mit den Zentriernasen P und den Entlüftungsöffnungen 2 zu erkennen sind.

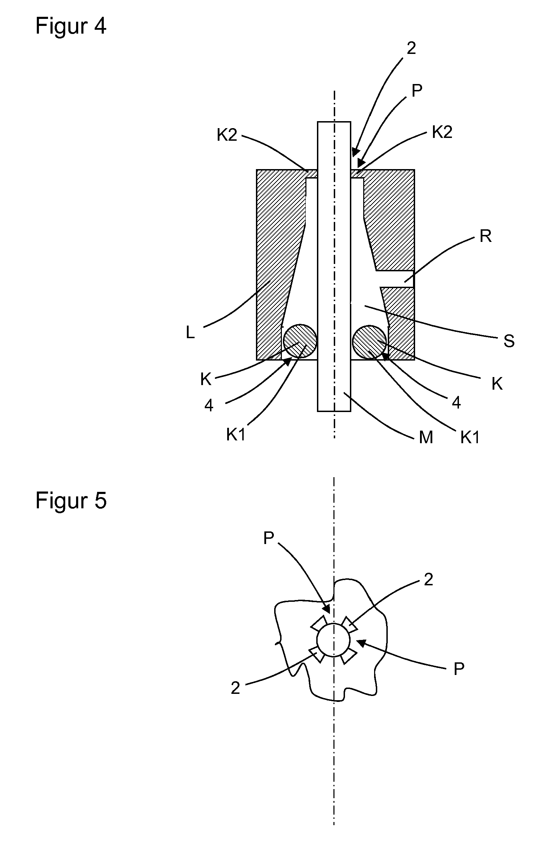

Figur 4 zeigt ein Ausschnitt eines Sensorgehäuses L zur Leitungsfixierung ähnlich dem Beispiel aus Figur 2, jedoch mit dem Unterschied, dass die erste Fixierung K durch ein Zentrierelement 4, beispielsweise einen O-Ring K1, gebildet ist. Dabei kann die Leitung M zusammen mit dem aufgesteckten O-Ring K1 in die Klebekammer S eingeschoben werden. Jedoch kann es auch vorgesehen sein, dass der O-Ring K1, bzw. das Zentrierelement 4, bereits in der Klebekammer S vormontiert wurde oder dass der O-Ring K1 bzw. das Zentrierelement 4 in die Klebekammer S eingeschoben wird, nachdem die Leitung M durch die zweite Fixierung K2 geführt wurde. Wesentlich ist, dass die Leitung M die Gehäusewand Q in der Klebekammer S zwischen der ersten Fixierung K und der zweiten Fixierung K2 nicht berührt, so dass die Leitung M radial vollständig von einem Luftspalt, also dem Hohlraum der Klebekammer S umgeben ist.

Figur 5 zeigt eine Ansicht analog zu Figur 3, nämlich den Teil aus Figur 4 in der Draufsicht (Pfeil V), wobei wieder die Zentriernasen P und die Entlüftungsöffnungen 2 erkennbar sind.

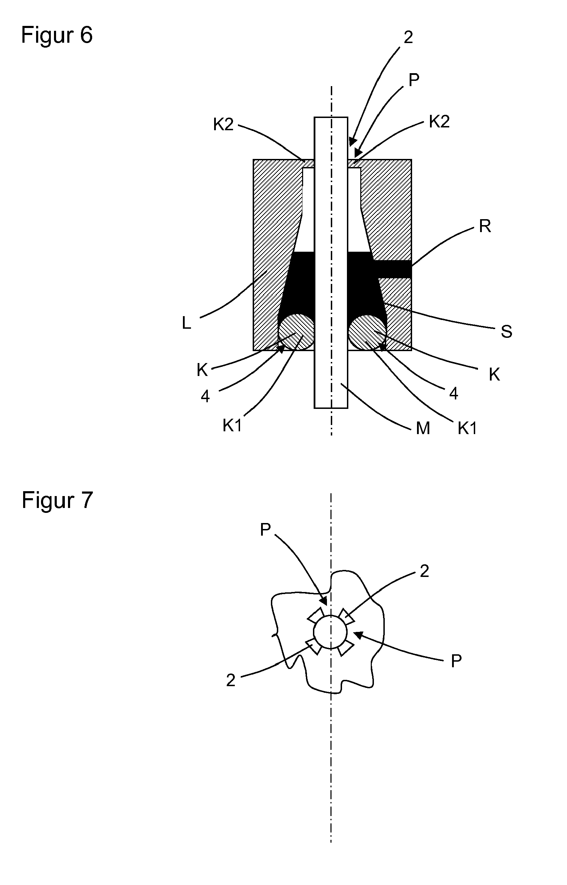

Figur 6 zeigt den Ausschnitt des Sensorgehäuses L aus Figur 4 während des Einspritzens des Klebstoffes N. Der Klebstoff N wird durch den Einfüllstutzen R in die Klebekammer S eingedrückt. Durch die Geometrie der Klebstoffkammer S mit dem sich in eine Richtung längs der Leitung M verändernden Querschnitt (größer werdend in Richtung K und kleiner werdend in Richtung K2) hat der Klebstoff in Richtung K einen geringeren Fließwiderstand mit der Konsequenz, dass der Klebstoff N zunächst den "unteren" Teil der Klebekammer füllt und dort die Leitung M radial umschließt, bevor der Klebstoff N in Richtung der zweiten Fixierung K2 mit den Entlüftungsöffnungen 2 fließt. Insgesamt wird dadurch die Leitung M lückenlos mit Klebstoff N umhüllt. In dem Stadium, das in Figur 6 dargestellt ist, ist der untere Teil der Klebekammer S, welcher zur ersten Fixierung K hin gerichtet ist, vollständig mit Klebstoff N gefüllt.

Figur 7 zeigt analog zu Figur 3 und 5 die Zentriernasen P und die Entlüftungsöffnungen 2.

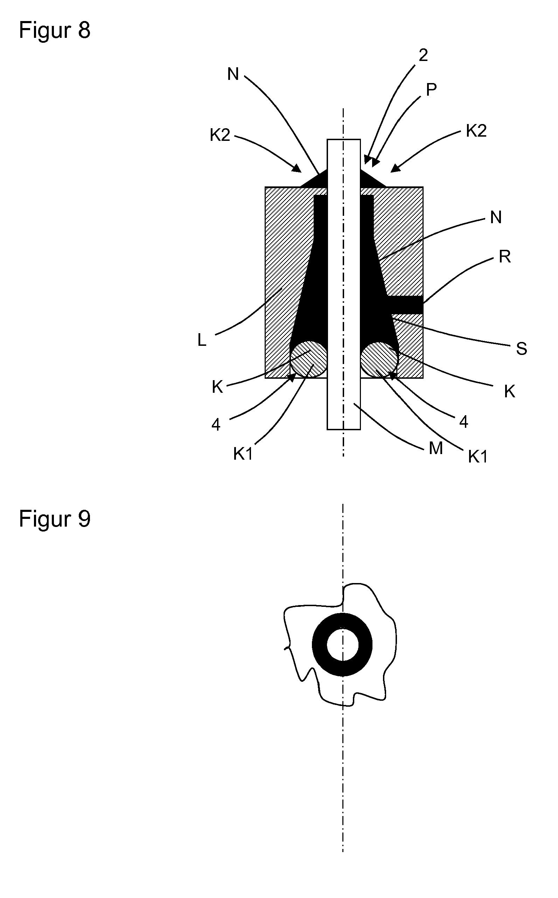

Figur 8 zeigt den abgeschlossenen Einfüllvorgang aus Figur 6, wenn der Klebstoff N nach Einspritzen die zweite Fixierung K2 mit den Entlüftungsöffnungen 2 erreicht hat und sogar etwas herausgequollen ist. Die Leitung M ist dabei vollständig durch den Klebstoff N in der Klebekammer S umschlossen. In dieser Fertigungsphase trocknet der Klebstoff N aus und fixiert die Leitung M final. Durch den Klebstoff N wird eine dichte Verbindung zwischen Sensorgehäuse L und Leitung M gebildet, wodurch das Sensorgehäuse L dicht ist. Biegekräfte, die auf die Leitung M einwirken können, wirken sich fast nicht auf die Klebestelle in der Klebekammer S aus, so dass die Klebestelle wenig mechanischen Biegekräften ausgesetzt ist. Da die Leitung M in der gesamten Klebekammer S radial von dem Klebstoff umschlossen ist, kann die Leitung M auch hohen Zugkräften standhalten, ohne dass die Dichtigkeit verschlechtert wird.

Die Entlüftungsöffnung 2 kann beispielsweise nach innen oder nach außen des Sensorgehäuses L gerichtet sein, wobei es bevorzugt ist, dass die Entlüftungsöffnung 2 nach innen gerichtet ist.

Figur 9 zeigt analog zu Figuren 3, 5 und 7 die Draufsicht, wobei jetzt die Zentriernasen P und die Entlüftungsöffnungen 2 durch den Klebstoff verdeckt sind.

### Bezugszeichen:

2 Entlüftungsöffnung
4 Zentrierelement
K erste Fixierung
K1 O-Ring
K2 zweite Fixierung
L Sensorgehäuse
M Leitung
N Klebstoff
P Zentriernasen
Q Gehäusewand
R Einfüllstutzen
S Klebekammer

## Patentansprüche

1. Leitungsfixierung an einem Sensorgehäuse (L), wobei die Leitung (M) an zwei beabstandeten Stellen fixiert ist, wobei zwischen diesen beabstandeten Stellen eine Klebekammer (S) vorhanden ist, welche die Leitung (M) vollständig radial umgibt,
**dadurch gekennzeichnet, dass**
das Sensorgehäuse (L) einen Gehäuseteil (Q) aufweist, wobei in dem Gehäuseteil (Q) die Leitung (M) die das Gehäuseteil (Q) durchsetzt fixiert ist, wobei die Leitung (M) an den zwei beabstandeten Stellen in einer Gehäusewand fixiert ist, wobei
eine erste Fixierung (K1) eine dichte Fixierung bildet und eine zweite Fixierung (K2) mindestens eine Entlüftungsöffnung (2) umfasst, wobei zwischen diesen Fixierungen ein Einfüllstutzen (R) angeordnet ist und die Klebekammer (S) ausgehend von dem Einfüllstutzen (R) in Richtung der ersten Fixierung (K) im Querschnitt größer werdend ausgebildet ist und in Richtung der zweiten Fixierung (K2) kleiner werdend, wobei in die Klebekammer (S) über den Einfüllstutzen (R) Klebstoff (N) durch Druck einspritzbar ist, zumindest bis der Klebstoff (N) die zweite Fixierung (K2) mit der Entlüftungsöffnung (2) erreicht.

2. Leitungsfixierung an einem Sensorgehäuse (L) nach Anspruch 1, **dadurch gekennzeichnet, dass** das Sensorgehäuse (L) in einem Spritzgussverfahren hergestellt ist.

3. Leitungsfixierung an einem Sensorgehäuse (L) nach einem der vorhergehenden Ansprüche, **dadurch gekennzeichnet, dass** die erste Fixierung (K) durch ein Zentrierelement (4), insbesondere einen O-Ring (K1) gebildet ist, wodurch die Leitung (M) derart zentriert ist, dass diese nicht an einer Gehäusewand (Q) anliegt.

4. Leitungsfixierung an einem Sensorgehäuse (L) nach einem der vorhergehenden Ansprüche, **dadurch gekennzeichnet, dass** die zweite Fixierung (K2) durch das Sensorgehäuse (L) selbst gebildet ist, wobei die zweite Fixierung (K2) durch Zentriernasen (P) des Sensorgehäuses (L) gebildet ist, wodurch die Leitung (M) an dieser Fixierung teilweise an der Gehäusewand (Q) anliegt.

5. Leitungsfixierung an einem Sensorgehäuse (L) nach einem der vorhergehenden Ansprüche, **dadurch gekennzeichnet, dass** die Klebekammer (S) konisch in Form eines Kegelstumpfes oder abgestuft ausgebildet ist.

6. Verfahren zur Leitungsfixierung an einem Sensorgehäuse (L), wobei die Leitung (M) an zwei beabstandeten Stellen fixiert wird, wobei zwischen diesen beabstandeten Stellen eine Klebekammer (S) vorhanden ist, welche die Leitung vollständig radial umgibt, **dadurch gekennzeichnet, dass** das Sensorgehäuse (L) einen Gehäuseteil (Q) aufweist, wobei in dem Gehäuseteil (Q) die Leitung (M) die das Gehäuseteil (Q) durchsetzt fixiert wird, wobei die Leitung (M) an den zwei beabstandeten Stellen in einer Gehäusewand fixiert wird, wobei eine erste Fixierung (K) eine dichte Fixierung bildet und eine zweite Fixierung (K2) mindestens eine Entlüftungsöffnung (2) umfasst, wobei zwischen diesen Fixierungen ein Einfüllstutzen (R) angeordnet ist und die Klebekammer (S) ausgehend von dem Einfüllstutzen (R) in Richtung der ersten Fixierung (K) im Querschnitt größer wird und in Richtung der zweiten Fixierung (K2) kleiner wird, wobei in die Klebekammer (S) über den Einfüllstutzen (R) Klebstoff (N) durch Druck eingespritzt wird, zumindest bis der Klebstoff (N) die zweite Fixierung (K2) mit der Entlüftungsöffnung (2) erreicht.

7. Verfahren zur Leitungsfixierung an einem Sensorgehäuse (L) nach Anspruch 6, **dadurch gekennzeichnet, dass** das Sensorgehäuse (L) in einem Spritzgussverfahren hergestellt wird.

8. Verfahren zur Leitungsfixierung an einem Sensorgehäuse (L) nach einem der vorhergehenden Ansprüche 6 bis 7, **dadurch gekennzeichnet, dass** die die Leitung (M) von der ersten Fixierung (K1) derart zentriert wird, dass die Leitung (M) nicht an der Gehäusewand (Q) anliegt.

9. Verfahren zur Leitungsfixierung an einem Sensorgehäuse nach einem der vorhergehenden Ansprüche 6 bis 8, **dadurch gekennzeichnet, dass** die zweite Fixierung (K2) durch einen Teil des Sensorgehäuses (L) gebildet wird, wodurch die Leitung (M) teilweise an der Gehäusewand (Q) anliegt.

## Claims

1. A line fixing at a sensor housing (L), wherein the line (M) is fixed at two spaced apart points, wherein an adhesive chamber (S) is present between these spaced apart points and completely surrounds the line (M) radially,
**characterised in that**
the sensor housing (L) has a housing part (Q), with the line (M) passing through the housing part (Q) being fixed in the housing part (Q), with the line (M) being fixed in a housing wall at the two spaced apart points, wherein
a first fixing (K1) forms a tight fixing and a second fixing (K2) comprises at least one ventilation opening (2), with a filling stub (R) being arranged between these fixings and the adhesive chamber (S) being configured, starting from the filling stub (R), as becoming larger in cross-section in the direction of the first fixing (K) and as becoming smaller in the direction of the second fixing (K2), with adhesive (N) being able to be injected by pressure into the adhesive chamber (S) via the filling stub (R), at least until the adhesive (N) reaches the second fixing (K2) having the ventilation opening (2).

2. A line fixing at a sensor housing (L) in accordance with claim 1, **characterised in that** the sensor housing (L) is manufactured in an injection moulding process.

3. A line fixing at a sensor housing (L) in accordance with one of the preceding claims, **characterised in that** the first fixing (K) is formed by a centring element (4), in particular an O ring (K1), whereby the line (M) is centred such that it does not contact a housing wall (Q).

4. A line fixing at a sensor housing (L) in accordance with any one of the preceding claims, **characterised in that** the second fixing (K2) is formed by the sensor housing (L) itself, with the second fixing (K2) being formed by centring noses (P) of the sensor housing (L), whereby the line (M) partly contacts this fixing at the housing wall (Q).

5. A line fixing at a sensor housing (L) in accordance with any one of the preceding claims, **characterised in that** the adhesive chamber (S) is formed conically in the form of a truncated cone or in stepped form.

6. A method for line fixing at a sensor housing (L), wherein the line (M) is fixed at two spaced apart points, wherein an adhesive chamber (S) is present between these spaced apart points and completely surrounds the line radially, **characterised in that** the sensor housing (L) has a housing part (Q), with the line (M) passing through the housing part (Q) being fixed in the housing part (Q), with the line (M) being fixed at the two spaced apart points in a housing wall, wherein a first fixing (K) forms a tight fixing and a second fixing (K2) comprises at least one ventilation opening (2), with a filling stub (R) being arranged between these fixings and the adhesive chamber (S) being configured, starting from the filling stub (R) as becoming larger in cross-section in the direction of the first fixing (K) and as becoming smaller in the direction of the second fixing (K2), with adhesive (N) being injected by pressure into the adhesive chamber (S) via the filling stub (R), at least until the adhesive (N) reaches the second fixing (K2) having the ventilation opening (2).

7. A method for line fixing at a sensor housing (L) in accordance with claim 6, **characterised in that** the sensor housing (L) is manufactured in an injection moulding process.

8. A method for line fixing at a sensor housing (L) in accordance with one of the preceding claims 6 to 7, **characterised in that** the line (M) is centred by the first fixing (K1) such that the line (M) does not contact the housing wall (Q).

9. A method for line fixing at a sensor housing in accordance with any one of the preceding claims 6 to 8, **characterised in that** the second fixing (K2) is formed by a part of the sensor housing (L), whereby the line (M) partly contacts the housing wall (Q).

## Revendications

1. Fixation pour câble sur un boîtier de capteur (L), dans laquelle le câble (M) est fixé en deux emplacements écartés, et entre ces deux emplacements écartés est prévue une chambre à colle (S) qui entoure radialement entièrement le câble (M),
**caractérisée en ce que**
le boîtier de capteur (L) comprend une partie de boîtier (Q), le câble (M) qui traverse la partie de boîtier (Q) est fixé dans la partie de boîtier (Q), le câble (M) étant fixé dans une paroi du boîtier au niveau des deux emplacements écartés, dans laquelle
une première fixation (K1) forme une fixation étanche et une seconde fixation (K2) inclut au moins une ouverture de mise à l'air (2), dans laquelle une pipe de remplissage (R) est agencée entre ces deux fixations, et la chambre à colle (S) est réalisée de telle manière que sa section transversale devient plus grande en partant de la pipe de remplissage (R) en direction de la première fixation (K) et devient plus petite en direction de la seconde fixation (K2), dans laquelle de la colle (N) est susceptible d'être injectée sous pression dans la chambre à colle (CS) via la pipe de remplissage (R), au moins jusqu'à ce que la colle (N) atteigne la seconde fixation (K2) avec l'ouverture de mise à l'air (2).

2. Fixation pour câble sur un boîtier de capteur (L) selon la revendication 1, **caractérisée en ce que** le boîtier de capteur (L) est fabriqué dans une procédure de moulage par injection.

3. Fixation pour câble sur un boîtier de capteur (L) selon l'une des revendications précédentes, **caractérisée en ce que** la première fixation (K) est formée par un élément de centrage (4), en particulier par une bague torique (K1), grâce à quoi le câble (M) est centré de telle façon que celui-ci ne s'applique pas contre une paroi du boîtier (Q).

4. Fixation pour câble sur un boîtier de capteur (L) selon l'une des revendications précédentes, **caractérisée en ce que** la seconde fixation (K2) est formée par le boîtier de capteur (L) lui-même, et la seconde fixation (K2) est formée par des ergots de centrage (P) du boîtier de capteur (L), grâce à quoi le câble (M) s'applique partiellement contre la paroi du boîtier (Q) au niveau de cette fixation.

5. Fixation pour câble sur un boîtier de capteur (L) selon l'une des revendications précédentes, **caractérisée en ce que** la chambre à colle (S) est réalisée de manière conique sous la forme d'un tronc de cône ou en gradins.

6. Procédé pour la fixation d'un câble sur un boîtier de capteur (L), dans lequel le câble (M) est fixé en deux emplacements écartés, dans lequel entre ces deux emplacements écartés est prévue une chambre à colle (S) qui entoure entièrement radialement le câble, **caractérisé en ce que** le boîtier de capteur (L) comprend une partie de boîtier (Q), le câble (M) qui traverse la partie de boîtier (Q) est fixé dans la partie de boîtier (Q), dans lequel le câble (M) est fixé dans une paroi du boîtier aux deux emplacements écartés, dans lequel
une première fixation (K) forme une fixation étanche, et une seconde fixation (K2) inclut au moins une ouverture de mise à l'air (2), dans lequel une pipe de remplissage (R) est agencée entre ces deux fixations et la chambre à colle (S) devient plus grande en section transversale en partant de la pipe de remplissage (R) en direction de la première fixation (K), et devient plus petite dans la direction de la seconde fixation (K2),
dans lequel de la colle (N) est injectée sous pression dans la chambre à colle (S) via les pipes de remplissage (R), au moins jusqu'à ce que la colle (N) atteigne la seconde fixation (K2) avec l'ouverture de mise à l'air (2).

7. Procédé pour la fixation d'un câble sur un boîtier de capteur (L) selon la revendication 6, **caractérisé en ce que** le boîtier de capteur (L) est fabriqué dans une procédure de moulage par injection.

8. Procédé pour la fixation de câble sur un boîtier de capteur (L) selon l'une des revendications précédentes 6 à 7, **caractérisé en ce que** le câble (M) est centré par la première fixation (K1) de telle façon que le câble M ne s'applique pas contre la paroi de boîtier (Q).

9. Procédé pour la fixation de câble sur un boîtier de capteur selon l'une des revendications précédentes 6 à 8, **caractérisé en ce que** la seconde fixation (K2) est formée par une partie du boîtier de capteur (L), grâce à quoi le câble (M) s'applique partiellement contre la paroi de boîtier (Q).
